# EUROPEAN PATENT SPECIFICATION

(11) **EP 3 537 864 B1**
(45) Date of publication and mention of the grant of the patent: **27.09.2023**
(21) Application number: 17838163.8
(22) Date of filing: 06.11.2017
(51) Int. Cl.: A01C 11/02

(54) **TRANSPLANTER MACHINE FOR SEEDLINGS ROOTED IN SODS**
VERPFLANZMASCHINE FÜR IN SODEN VERWURZELTE SÄMLINGE
MACHINE DE REPIQUAGE DESTINÉE À DES PLANTULES ENRACINÉES DANS DES PLAQUES DE GAZON

(30) Priority: 08.11.2016 IT 201600112250
(43) Date of publication of application: 18.09.2019
(73) Proprietor: Ferrari Costruzioni Meccaniche S.r.l., 46040 Guidizzolo (MN) (IT)
(72) Inventor: FERRARI, Francesco, 46040 Guidizzolo (MN) (IT)
(74) Representative: Mari, Marco Giovanni
(86) International application number: PCT/IT2017/000244
(87) International publication number: WO 2018/087790

(56) References cited:
- WO-A1-90/07263
- FR-A1- 2 560 482
- JP-A- H 092

## Description

The present invention relates to a transplanter machine for seedlings rooted in sods.

As is known, transplanter machines are used to rapidly transplant seedlings, vegetables, etc., which are first grown in small sods of soil with a truncated pyramid, conical or cylindrical shape. The seedlings are supplied still rooted in the sods and must be transplanted one by one into the bare or sometimes mulched ground, i.e. covered by a thin plastic film.

In general terms, a transplanter machine is provided with a series of feeders housing the seedlings in blocks and acting as storage reservoir, the same in number as the rows to be transplanted in that given space, and a series of distribution devices for placing the single sods in the ground, the same in number as the transplanting units. Naturally, these operations must be performed extremely rapidly, but with a certain precision and without damaging the seedlings; in particular, correct positioning of the seedling in the furrow is very important for its rooting and growth.

In traditional transplanter machines, rotary feeders are known, each made by means of a turntable rotatingly supported by a vertical axis, and comprising a plurality of containers, each of which can contain a sod.

The turntable is driven by special transmission means, which make it rotate in steps when the machine advances in a straight line, and is provided with an aperture enabling the synchronized drop of a single sod in the direction of the distributor below.

In traditional transplanter machines, "cup" distributors are also known, comprising an articulated kinematic chain fitted with a certain number of cups, each of which can contain a seedling along with its sod of soil.

Each cup is composed in substance of two oblique lateral walls rotatingly bound to one another by a spring and hinge system that enables their joint movement.

In proximity to the ground, a cam causes the cup to open, and the lateral walls, as they open, prepare the ground and let the previously held seedling fall into the furrow thus prepared.

This system, which is also known as the "pelican" system, in substance involves each cup performing both operations of preparing the hole for the sod in the ground (and possibly cutting the mulching film), and placing the seedling in the desired position.

Between the rotary feeder and the "cup" distributor below, aligned with the direction of travel of the transplanter machine, there is placed a straight vertical header, adapted to accompany the seedling's drop into the cup, which is still closed.

Document WO 90/07263 A1 refers to a transplanter machine for seedlings rooted in sods, comprising:
- a supporting frame connectable to an agricultural machine;
- means for resting and advancing on the ground;
- at least one transplanter unit,
where said at least one transplanter unit comprises:
- a feeder for a plurality of seedlings comprising a hole with vertical axis through which said seedlings are delivered in sequence;
- distribution means for said plurality of seedlings, comprising a cup, provided with two oblique lateral walls having a mutual opening movement, and adapted to perforate and prepare the ground to deposit the single seedlings into it;
- a header having a tubular shape, comprising a plurality of portions connected to one another so as to obtain a segmented or curvilinear trend.

Said header is provided with an inlet for said seedlings positioned in proximity of said feeder, and an outlet for said seedlings directly connected to said cup and in axis to it, so as to release the seedling into said cup while it is still closed.

Said header has a longitudinal development direction that belongs to the median plane of the transplanting unit.

This type of transplanter machine have several limits and disadvantages.

First of all, the verticality of the header lets the seedlings drop into the cup below from a height that is typically several dozen centimetres (the height of the rotating turntable distributor from the cup to be filled): this is a short drop, but not negligible, especially if the sod is particularly wet, as is required for several crops in rather arid grounds.

The wet sod in free fall, as it impacts at a certain speed against the oblique lateral walls of the cup, may disadvantageously release soil residues on the surface of the mobile lateral walls.

Continuous, repeated deposition of wet soil can lead, over time, to the formation of thicknesses of residue materials, a sort of crust, that can compromise the release of the sod.

This problem in most cases results in the failure of the seedling to be delivered, with consequent clogging of the cup and inevitable gaps in the cycle to plant the seedlings in the ground.

The machine therefore needs to be stopped to enable the cups to be cleaned and for machine maintenance, and for the manual repositioning of seedlings not planted, with resultant delays to transplanting operations and lower overall hourly yields.

A further disadvantage is the fact that the sods, and therefore the root systems of the seedlings, may be damaged by colliding violently against the walls of the cup.

Furthermore, the collisions may affect the drop in an unpredictable manner, therefore making it difficult to guarantee the perfectly vertical planting of the seedling in the ground.

The object of the invention is to overcome these limits, and in particular to guarantee the ability to work with very wet sods, avoiding the aforementioned problems caused by the strong impact of the sods against the walls of the cup, enabling correct, fast and safe positioning, and increasing the hourly productivity of the transplanter machine, by reducing planting gaps.

These objects are achieved by a transplanter machine for seedlings rooted in sods, adapted to operate according to a direction of travel, comprising:
- a supporting frame connectable to an agricultural machine;
- means for resting and advancing on the ground in said direction of travel;
- at least one transplanter unit,
where said at least one transplanter unit comprises:
- a feeder for a plurality of seedlings, comprising a hole with vertical axis through which said seedlings are delivered in sequence;
- distribution means for said plurality of seedlings, comprising a first cup, provided with two oblique lateral walls having a mutual opening movement, and adapted to perforate and prepare the ground to deposit the single seedlings into it;
- a header having a tubular shape, comprising a plurality of portions connected to one another so as to obtain a segmented or curvilinear trend, provided with an inlet for said seedlings positioned in proximity of said feeder, and an outlet for said seedlings,
where said transplanter unit is characterized in that:
- said feeder is rotating and it's rotatingly supported by a substantially vertical axis;
- said distribution means comprise two parallel toothed discs, offset against one another, between which is provided a plurality of cups;
- said heeder is positioned and extends laterally with respect to the direction of travel of said transplanter machine, extending until it is in close proximity to the ground, so as to convey said seedlings into said plurality of cups when the two oblique lateral walls of each cup are sunk into and open in the ground, so as to deposit the seedling directly in said ground;
- said header has a direction of longitudinal extension that belongs to a plane substantially orthogonal to the direction of travel of the transplanter machine and the axis of said hole of the rotary feeder belongs to said plane.

According to a possible variant of the invention, said header comprises at least one first vertical portion and an inclined portion joined to one another.

According to a preferred variant, said inclined portion extends by orthogonally connecting the axis of the hole of the rotary feeder with the direction of travel of the machine.

Advantageously, said header comprises a second vertical portion joined to said inclined portion and its outlet is positioned at said second vertical portion.

In particular, said outlet comprises at least one lip adapted to produce said outlet, and said outlet of the header is positioned at a height from the ground of less than 30 centimetres.

According to a possible aspect of the invention, said tubular shape of said header has a quadrangular cross-section.

The transplanter machine according to the invention has numerous advantages.

The main advantage deriving from the shape, position and extension of the header consists in being able to directly position the seedlings in the already-prepared ground, by passing through a cup whose walls are already spread apart. In this way, the wet sod is prevented from impacting against the closed walls of the cup, therefore without the risk of soil residues being left behind that over time could create incrustation and clogging.

By arranging the header sideways, there are no problems with dimensions or interference with the other components of the machine, and it is possible to shape said header with a segmented trend, which makes it possible to reduce the drop speed of the seedling, which is therefore deposited with greater precision and verticality directly into the ground by passing through the open cup.

A slower descent of the seedling, without any frontal impact against the walls of the cup, keeps the wet sod intact until it is positioned in the ground, with better prospects for the seedling to root.

Since material is no longer left on the walls of the cup, it is no longer necessary to stop the machine for cleaning and maintenance, resulting in greater machine productivity.

These and other features and advantages of the invention will be more evident from the more detailed description set forth below, with the aid of the drawings, which show a preferred embodiment thereof, illustrated by way of non-limiting example, wherein:

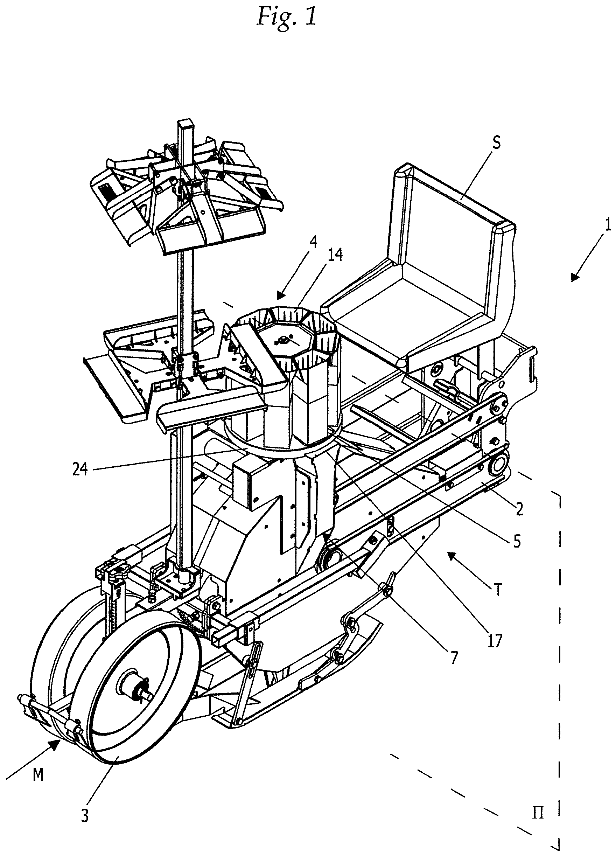

Figs. 1 and 2 show respectively an axonometric view and a lateral plan view partly without protective casing, of a transplanter machine for seedlings rooted in sods according to the invention;
Fig. 3 shows a transversal cross-section view along a vertical plane, of the transplanter machine shown in Fig. 1;
Fig. 4 shows a transversal cross-section view along a vertical plane, of a detail of the machine shown in Fig. 3.

With reference to the figures, a transplanter machine 1 for seedlings P rooted in sods is shown, adapted to operate according to a direction of travel M, substantially comprising a supporting frame 2 provided with wheels 3, which act as means for resting and advancing on the ground in said direction of travel M, and a transplanter unit T.

The transplanter machine 1 can be a self-propelled type, provided with its own motor, or have no motor, for use with an agricultural tractor or other towing means, as in the variant shown.

In the variant shown, the machine 1 is provided with a single transplanter unit T, but in alternative variants several modular transplanter units may be provided on a single machine to operate simultaneously on several parallel rows.

Said transplanter unit T comprises a rotary feeder 4, or turntable, for a plurality of seedlings P, rotatingly supported by a substantially vertical axis.

Said rotary feeder 4 comprises a plurality of open-bottomed chambers 14 for holding said seedlings P previously loading inside them.

Said feeder 4 rotates above a fixed disc 24 acting as the bottom for said chambers 14.

Said disc 24 comprises a single hole 5 with vertical axis y, so as to allow delivery of the single seedlings P in sequence.

Said feeder 4 is in fact connected to transmission means, which make it turn step-by step when the machine 1 advances in a straight line.

At every step of the feeder 4, a chamber 14 is aligned with the hole 5 of said fixed disc 24, thereby allowing the expulsion of the seedling P contained therein.

An operator, seated on the seat S in front of the turntable, refills the empty chambers as the seedlings drop.

Said transplanter unit T also comprises means for the distribution and planting of said plurality of seedlings P in the ground.

Said distribution means comprise two parallel toothed discs 8, 9, offset against one another, between which is provided a plurality of cups 6.

The cups 6 are spaced from one another as a function of the desired transplanting distance.

Each cup 6 is substantially composed of an upper collar portion 16, for inserting the seedlings P, and a lower portion formed by two oblique lateral walls 6a and 6b hinged at the upper portion 16 of the cup 6, and bound to one another by a spring and hinge system that enables their joint movement.

In proximity to the ground, a cam mechanism causes the cup 6 to open, so that the lateral walls 6a and 6b spread apart the ground creating a cavity or hole for the seedlings.

Said transplanter unit T comprises transmission means that coordinate the step-by-step rotation of the rotary feeder 4 with the continuous rotation of the toothed discs that support and move the cups 6, and with the opening of the vertical walls 6a, 6b of the cup 6 sunk into the ground, through which the seedling P to be planted passes.

Said transplanter unit T lastly comprises a header 7, with a direction of longitudinal extension x, placed between said rotary feeder 4 and said "cup" 6 distribution means, adapted to accompany the seedling P during its descent in proximity of the ground and thereby avoid a sudden vertical drop as happens with traditional machines.

Said header 7 is placed laterally with respect to the direction of travel M of the transplanter machine 1: the direction of longitudinal extension x of said header 7 belongs to a plane rr substantially orthogonal to the direction of travel M of the transplanter machine 1 and therefore to the line along which the seedlings P are planted in the ground.

Said header 7 has a tubular shape with a quadrangular (particularly square) cross-section, and is provided with an inlet 17 and an outlet 27 for said seedlings P.

Said inlet 17 is associated with said rotary feeder 4, at the hole 5 of the fixed disc 24 from which the seedlings P are expelled, while said outlet 27 is positioned in proximity to the ground along the planting line.

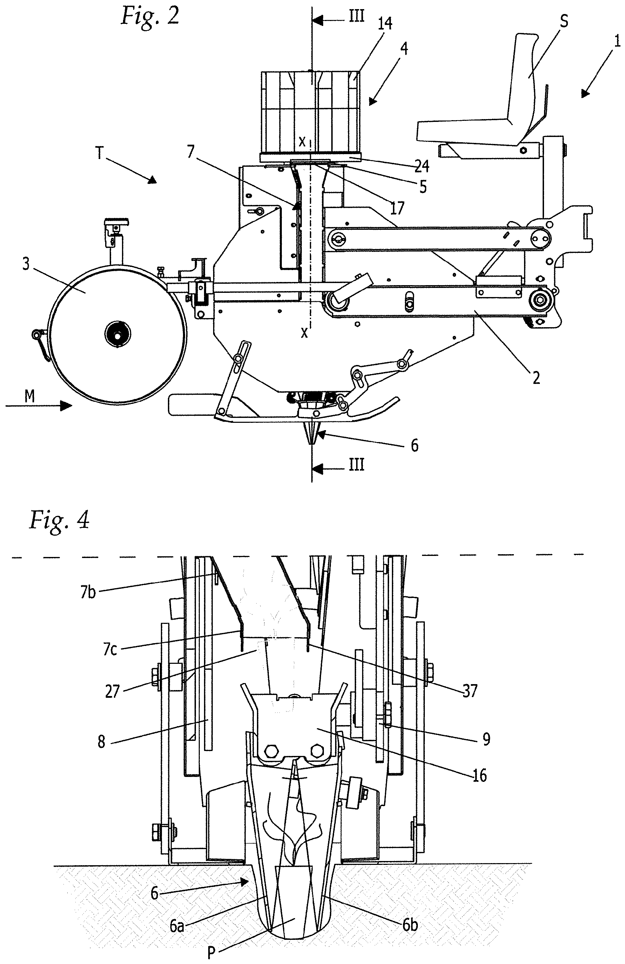

In particular, the outlet 27 of the header 7 is positioned at a height from the ground of less than 30 centimetres. The drop of the seedling P is considerably less than the several dozen centimetres found with traditional machines, and is above all directly into the ground, with no longer any risk of soil being deposited on the lateral walls of the cups (Fig. 4).

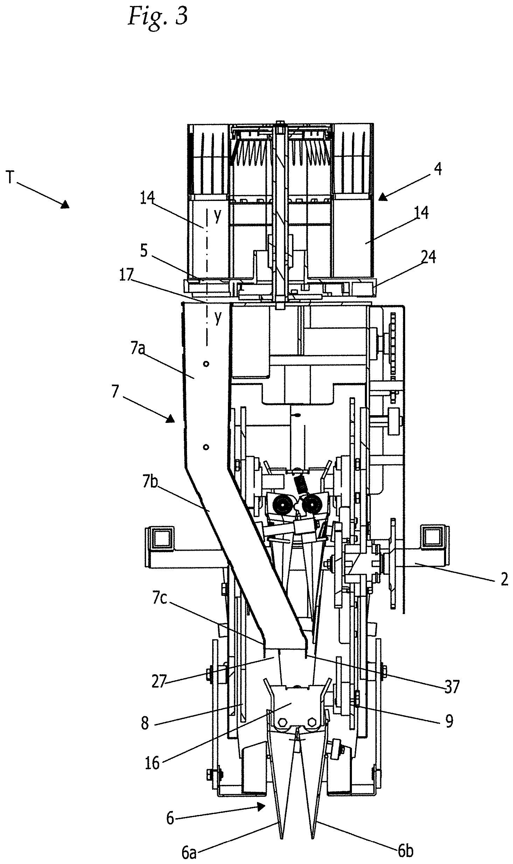

With particular reference to the cross-section shown in Figure 3, said header 7 comprises a plurality of portions 7a, 7b, 7c connected to one another so as to obtain a "segmented" or curvilinear trend.

Said header 7 comprises a first vertical portion 7a and a second portion 7c, also vertical, joined to one another by an inclined portion 7b.

Said second vertical portion 7c is produced by means of a lip 37 of said outlet 27.

Said second vertical portion 7c orients the sod and guides it towards the inside of the cup 6 beneath.

Operation of the transplanter machine 1 is as follows, with reference to each single transplanter unit T.

The rotary feeder 4 moves in steps coordinated with the position taken by the cup 6 closest to the ground, so that a seedling P passes through the hole 5 and descends along the header 7 to arrive directly in the ground, just after the walls 6a and 6b of the cup 6 have been sunk into the ground and, spreading apart, have opened a hole into which the seedling P can fall.

## Claims

1. Transplanter machine (1) for seedlings (P) rooted in sods, adapted to operate according to a direction of travel (M), comprising:
- a supporting frame (2) connectable to an agricultural machine;
- means for resting and advancing (3) on the ground in said direction of travel (M);
- at least one transplanter unit (T),
where said at least one transplanter unit (T) comprises:
- a feeder (4) for a plurality of seedlings (P), rotatingly supported by a substantially vertical axis, comprising a hole (5) with vertical axis (y) through which said seedlings (P) are delivered in sequence;
- distribution means for said plurality of seedlings (P), comprising a first cup (6), provided with two oblique lateral walls (6a, 6b) having a mutual opening movement, and adapted to perforate and prepare the ground to deposit the single seedlings (P) into it;
- a header (7) having a tubular shape, comprising a plurality of portions (7a, 7b, 7c) connected to one another so as to obtain a segmented or curvilinear trend, provided with an inlet (17) for said seedlings (P) positioned in proximity of said feeder (4), and an outlet (27) for said seedlings,
where said transplanter unit (T) is **characterized in that**:
- said feeder (4) is rotating and is rotatingly supported by a substantially vertical axis;
- said distribution means comprise two parallel toothed discs (8, 9), offset against one another, between which is provided a plurality of cups (6);
- said heeder (7) is positioned and extends laterally with respect to the direction of travel (M) of said transplanter machine (1), extending until it is in close proximity to the ground, so as to convey said seedlings (P) into said plurality of cups (6) when the two oblique lateral walls (6a, 6b) of each cup (6) are sunk into and open in the ground, so as to deposit the seedling (P) directly in said ground;
- said header (7) has a direction of longitudinal extension (x) that belongs to a plane (π) substantially orthogonal to the direction of travel (M) of the transplanter machine (1) and the axis (y) of said hole (5) of the rotary feeder (4) belongs to said plane (π).

2. Transplanter machine (1) according to claim 1, wherein said header (7) comprises at least a first vertical portion (7a) and an inclined portion (7b) joined to each other.

3. Transplanter machine (1) according to claim 2, wherein said inclined portion (7b) extends orthogonally connecting the axis (y) of the hole (5) of the rotary feeder (4) with the direction of travel (M) of the machine (1).

4. Transplanter machine (1) according to claim 3, wherein said header comprises a third vertical portion (7c) joined to said inclined portion (7b) and its outlet (27) is positioned at said second vertical portion (7c).

5. Transplanter machine (1) according to claim 4, wherein said outlet (27) comprises at least one lip (37) adapted to produce said outlet (27).

6. Transplanter machine (1) according to claim 1, wherein said tubular shape of said header (7) has a quadrangular cross section.

7. Transplanter machine (1) according to claim 1, wherein said outlet (27) of the header (7) is positioned at a height from the ground of less than 30 centimeters.

## Patentansprüche

1. Verpflanzmaschine (1) für in Soden verwurzelte Sämlinge (P), geeignet, um in einer Fahrtrichtung (M) zu arbeiten, umfassend:
- einen Stützrahmen (2), der mit einer Landwirtschaftsmaschine verbunden werden kann;
- Mittel zum Aufstützen und Fortbewegen (3) auf dem Boden in der besagten Fahrtrichtung (M);
- mindestens eine Verpflanzeinheit (T),
wobei die besagte mindestens eine Verpflanzeinheit (T) Folgendes umfasst:
- eine Zuführvorrichtung (4) für eine Vielzahl an Sämlingen (P), die durch eine im Wesentlichen vertikale Achse drehbar gelagert ist und ein Loch (5) mit vertikaler Achse (y) umfasst, durch das die besagten Sämlinge (P) nacheinander zugeführt werden;
- Verteilungsmittel für die besagte Vielzahl von Sämlingen (P), umfassend einen ersten Kelch (6), der mit zwei schrägen Seitenwänden (6a, 6b) versehen ist, die eine gegenseitige Öffnungsbewegung aufweisen, geeignet, um den Boden zu durchlochen und vorzubereiten, um die einzelnen Sämlinge (P) darin abzulegen;
- einen rohrförmigen Kopf (7), umfassend eine Vielzahl von Abschnitten (7a, 7b, 7c), die miteinander verbunden sind, so dass sie eine segmentierte oder gekrümmte Tendenz erhalten, versehen mit einem Einlass (17) für die besagten Sämlinge (P), die in der Nähe der besagten Zuführvorrichtung (4) positioniert sind, und einem Auslass (27) für die besagten Sämlinge,
wobei die besagte Verpflanzeinheit (T) **dadurch gekennzeichnet ist, dass**:
- die besagte Zuführvorrichtung (4) rotiert und durch eine im Wesentlichen vertikale Achse rotierend getragen wird;
- die besagten Verteilungsmittel zwei parallele Zahnscheiben (8, 9) umfassen, die gegeneinander versetzt sind, zwischen denen eine Vielzahl von Kelchen (6) vorgesehen ist;
- der besagte Kopf (7) positioniert ist und sich seitlich in Bezug auf die Fahrtrichtung (M) der besagten Verpflanzmaschine (1) erstreckt, wobei er sich so weit erstreckt, bis er sich in unmittelbarer Nähe des Bodens befindet, so dass er die besagten Sämlinge (P) in die besagte Vielzahl von Kelchen (6) befördert, wenn die beiden schrägen Seitenwände (6a, 6b) jedes Kelchs (6) in den Boden versenkt und geöffnet sind, so dass die Sämlinge (P) direkt in den besagten Boden abgelegt werden;
- der besagte Kopf (7) eine Längserstreckungsrichtung (x) aufweist, die zu einer Ebene (π) gehört, die im Wesentlichen der Fahrtrichtung (M) der Verpflanzmaschine (1) entspricht und die Achse (y) des besagten Lochs (5) der Drehzuführvorrichtung (4) zu der besagten Ebene (π) gehört.

2. Verpflanzmaschine (1) gemäß Anspruch 1, wobei besagter Kopf (7) einen ersten vertikalen Abschnitt (7a) und einen schrägen Abschnitt (7b) umfasst, die miteinander verbunden sind.

3. Verpflanzmaschine (1) gemäß Anspruch 2, wobei sich der geneigte Abschnitt (7b) orthogonal erstreckt und die Achse (y) des Lochs (5) der Drehzuführvorrichtung (4) mit der Fahrtrichtung (M) der Maschine (1) verbindet.

4. Verpflanzmaschine (1) gemäß Anspruch 3, wobei besagter Kopf einen dritten vertikalen Abschnitt (7c) umfasst, der mit dem besagten geneigten Abschnitt (7b) verbunden ist und dessen Auslass (27) an dem besagten zweiten vertikalen Abschnitt (7c) positioniert ist.

5. Verpflanzmaschine (1) gemäß Anspruch 4, wobei besagter Auslass (27) mindestens ein Vorderteil (37) umfasst, das geeignet ist, den besagten Auslass (2) zu erzeugen.

6. Verpflanzmaschine (1) gemäß Anspruch 1, wobei besagte rohrförmige Form des besagten Kopfs (7) einen viereckigen Querschnitt aufweist.

7. Verpflanzmaschine (1) gemäß Anspruch 1, wobei besagter Auslass (27) des Kopfs (7) in einer Höhe von weniger als 30 Zentimetern über dem Boden positioniert ist.

## Revendications

1. Machine à repiquer (1) destinée à des plantules (P) enracinées dans des mottes de terre, adaptée pour fonctionner selon un sens de déplacement (M), comprenant :
- un châssis de support (2) pouvant être relié à une machine agricole ;
- des moyens d'appui et d'avancement (3) sur le sol dans ledit sens de déplacement (M) ;
- au moins une unité de repiquage (T),
où ladite unité de repiquage (T) au minimum comprend :
- un dispositif d'alimentation (4) d'une multitude de plantules (P), supporté en rotation par un axe substantiellement vertical, comprenant un trou (5) à axe vertical (y) à travers lequel lesdites plantules (P) sont distribuées en séquence ;
- des moyens de distribution pour ladite multitude de plantules (P), comprenant un premier godet (6), pourvu de deux parois latérales obliques (6a, 6b) ayant un mouvement d'ouverture réciproque, et adapté pour perforer et préparer le sol afin d'y déposer les plantules individuelles (P) ;
- un collecteur (7) de forme tubulaire, comprenant une multitude de portions (7a, 7b, 7c) reliées entre elles de manière à obtenir une tendance segmentée ou curviligne, pourvu d'une entrée (17) pour lesdites plantules (P) positionnées à proximité dudit dispositif d'alimentation (4), et d'une sortie (27) pour lesdites plantules,
où ladite unité de repiquage (T) est **caractérisée par le fait que** :
- ledit dispositif d'alimentation (4) est rotatif et est supporté en rotation par un axe substantiellement vertical ;
- lesdits moyens de distribution comprennent deux disques dentés parallèles (8, 9), décalés l'un par rapport à l'autre, entre lesquels est prévue une multitude de godets (6) ;
- ledit collecteur (7) est positionné et s'étend latéralement par rapport à la direction de déplacement (M) de ladite machine de repiquage (1), s'étendant jusqu'à proximité du sol, de manière à transporter lesdites plantules (P) dans ladite multitude de godets (6) lorsque les deux parois latérales obliques (6a, 6b) de chaque godet (6) sont enfoncées et ouvertes dans le sol, de manière à déposer la plantule (P) directement dans ledit sol ;
- ledit collecteur (7) a une direction d'extension longitudinale (x) qui appartient à un plan (π) substantiellement orthogonal à la direction de déplacement (M) de la machine à repiquer (1) et l'axe (y) dudit trou (5) du dispositif d'alimentation rotatif (4) appartient audit plan (π).

2. Machine à repiquer (1) selon la revendication 1, dans laquelle ledit collecteur (7) comprend au moins une première portion verticale (7a) et une portion inclinée (7b) jointes l'une à l'autre.

3. Machine à repiquer (1) selon la revendication 2, où ladite portion inclinée (7b) s'étend orthogonalement en reliant l'axe (y) du trou (5) du dispositif d'alimentation rotatif (4) avec la direction de déplacement (M) de la machine (1).

4. Machine à repiquer (1) selon la revendication 3, où ledit collecteur comprend une troisième portion verticale (7c) reliée à ladite portion inclinée (7b) et sa sortie (27) est positionnée au niveau de ladite deuxième portion verticale (7c).

5. Machine à repiquer (1) selon la revendication 4, où ladite sortie (27) comprend au moins une lèvre (37) adaptée pour produire ladite sortie (27).

6. Machine à repiquer (1) selon la revendication 1, où ladite forme tubulaire dudit collecteur (7) présente une section transversale quadrangulaire.

7. Machine à repiquer (1) selon la revendication 1, dans laquelle ladite sortie (27) du collecteur (7) est positionnée à une hauteur par rapport au sol inférieure à 30 centimètres.
